# FASCICULE DE BREVET EUROPEEN

(11) **EP 0 922 863 B1**
(45) Date de publication et mention de la délivrance du brevet: **28.05.2003**
(21) Numéro de dépôt: 98402876.1
(22) Date de dépôt: 19.11.1998
(51) Int. Cl.: F16B 13/04

(54) **Dispositif de fixation à plot monobloc**
Befestigungsvorrichtung mit einstückigem Stecker
Fastening device with unitary plug

(30) Priorité: 12.12.1997 FR 9715794
(43) Date de publication de la demande: 16.06.1999
(73) Titulaire: E.L.M. LEBLANC, F-93700 Drancy (FR)
(72) Inventeur: Delahaye, Christian, 93190 Livry-Gargan (FR)
(74) Mandataire: Armengaud Ainé, Alain

(56) Documents cités:
- EP-A- 0 270 913
- GB-A- 2 223 288
- LU-A- 67 092
- US-A- 5 036 674

## Description

La présente invention est relative à un dispositif de fixation pour appareils de chauffage, tels que notamment une chaudière murale. Elle vise plus particulièrement une cheville pourvue d'un plot acoustique.

On connaît des dispositifs de fixation, du type cheville en matière plastique, qui sont conçus pour des fixations légères et moyennes dans des matériaux pleins. Des technologies utilisant des chevilles en plastique à expansion sont couramment mises en oeuvre pour des matériaux creux.

Pour des fixations plus fortes, on utilise usuellement des chevilles métalliques, éventuellement à expansion, ou des pattes de scellement.

Un tel dispositif de fixation murale est décrit dans LU-A-67092.

Dans la première famille, les vis utilisées sont du type à bois ou à matériau friable, tandis que dans la deuxième, on utilise préférentiellement des vis métaux.

D'autres dispositifs de fixation sont conçus pour maintenir la partie arrière d'une chaudière, communément appelée dosseret à l'aplomb d'un mur.

Compte tenu des impératifs de montage et particulièrement de la nécessité de raccorder les différents réseaux d'adduction en eau et en gaz, les utilisateurs intègrent dans leur montage une certaine tolérance pour rattraper les jeux. Ils doivent également isoler acoustiquement la chaudière de son support, surtout lorsque cette chaudière est montée sur une paroi légère, afin d'éviter que la puissance acoustique de la chaudière ne soit amplifiée par un phénomène de résonance lié justement à cette paroi légère. Ainsi, le niveau de pression acoustique reçu par un utilisateur situé au centre de la pièce équipée de la chaudière sera seulement fonction des caractéristiques acoustiques de cette chaudière. En effet, celle-ci comporte un certain nombre d'éléments en mouvement (extracteur, pompe, brûleur...) qui engendrent des vibrations de diverses amplitudes et fréquences.

Souvent, la chaudière n'est pas prévue initialement pour un montage aisé sur des plots antivibratiles. La nécessité d'écarter la chaudière du mur oblige l'utilisateur à disposer des entretoises, d'une part au niveau de ces points d'accrochage, mais d'autre part au niveau des alimentations en fluides. On trouve sur le marché des kits acoustiques relativement onéreux et compliqués à installer. Au cours du montage de ces kits, les utilisateurs interposent entre le dosseret de la chaudière et le mur de soutènement, des dispositifs anti-vibrations ("silent block"), constitués généralement par des plots en élastomère, qu'ils enfilent lors du montage des vis.

Au cours de cette opération, compte tenu que le montage correct d'une chaudière murale nécessite au moins trois ou quatre vis, le risque de laisser tomber des plots n'est pas négligeable, ce qui ne simplifie pas la tâche des opérateurs.

En outre, dans un montage utilisant un empilage de plusieurs objets, les tolérances de fabrication s'ajoutent, ce qui peut créer des problèmes d'alignement et de mise à niveau.

La présente invention vise à pallier ces inconvénients, en proposant un dispositif de fixation unique qui incorpore un dispositif anti-vibrations monobloc. Ledit dispositif de fixation comprend les caractéristiques de la revendication 1.

A cet effet, le dispositif de fixation selon l'invention comporte une virole et un fût divisé en trois parties :
- une première, sensiblement cylindrique, disposée dans la partie opposée du fût à celle qui reçoit un moyen de fixation, cette première partie étant par ailleurs pourvue d'un alésage ;
- une seconde, également sensiblement cylindrique mais pourvue extérieurement d'une pluralité de collerettes tronconiques juxtaposées, et également traversée par l'alésage central du fût, cette zone étant munie d'une pluralité de fentes longitudinales ou d'amorces à partir de zones prédécoupées uniformément réparties sur la périphérie du fût, de manière à autoriser une déformation en forme d'expansion diamétrale ;
- une troisième partie, formant l'autre extrémité du fût et recevant le moyen de fixation, et disposant sur sa paroi externe d'une zone de raccordement avec la partie médiane du fût, munie d'une pluralité de nervures faisant saillie extérieurement et qui sont uniformément réparties sur le contour externe de cette troisième partie, cette extrémité du fût disposant d'un bourrelet pour le montage de la virole.

D'autres caractéristiques et avantages de la présente invention ressortiront de la description faite ci-après, en référence aux dessins annexés qui en illustrent un exemple de réalisation. Sur les figures :

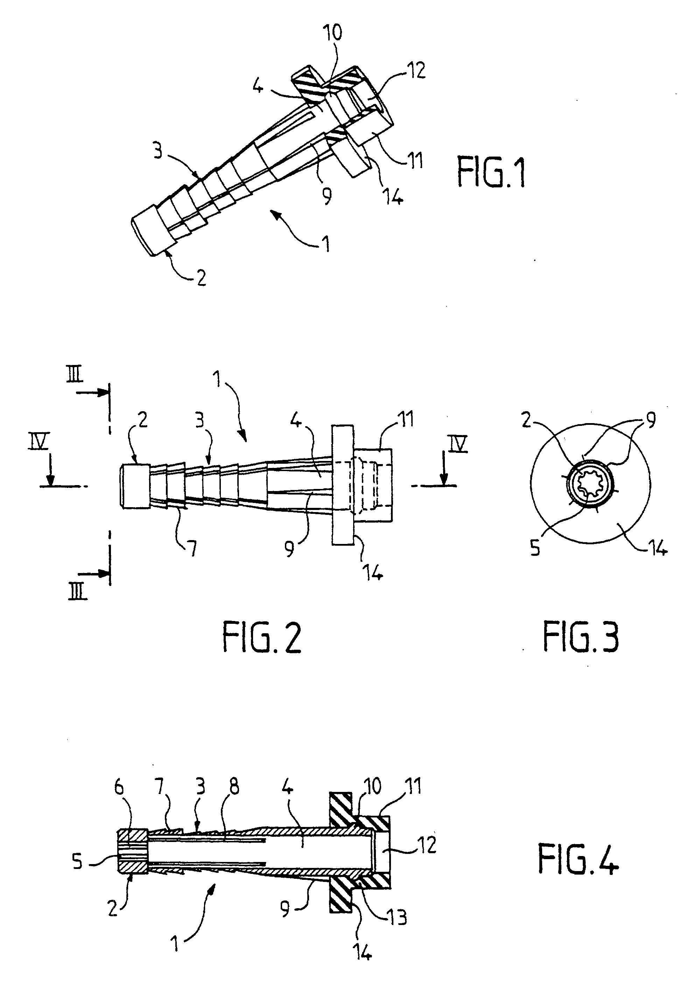

- la figure 1 est une vue en perspective du dispositif de fixation objet de l'invention ;
- la figure 2 est une vue en élévation plane du dispositif objet de l'invention ;
- la figure 3 est une vue en coupe et en élévation latérale de la figure 2 ;
- la figure 4 est une vue en coupe de la figure 2.

Selon un mode préféré de réalisation du dispositif, objet de l'invention, celui-ci comporte un fût 1 préférentiellement en matière plastique, du type polyéthylène haute densité, polyamide, polyamide 6.6 choc, qui se décompose en trois parties 2, 3, 4:
- une première 2, sensiblement cylindrique, disposée dans la partie opposée du fût 1 à celle 4 qui reçoit le moyen de fixation, cette première partie 2 étant par ailleurs pourvue d'un alésage 5 muni d'une pluralité de cannelures 6 longitudinales ;
- une seconde 3, également sensiblement cylindrique mais pourvue extérieurement d'une pluralité de collerettes tronconiques 7 juxtaposées dont la base de petite dimension est dirigée vers la première partie 2, et également traversée par l'alésage 5 central du fût 1. La juxtaposition de collerettes tronconiques 7 est munie d'une pluralité de fentes 8 longitudinales ou d'amorces à partir de zones prédécoupées uniformément réparties sur la périphérie du fût 1, de manière à autoriser une déformation en forme d'expansion diamétrale lorsque le dispositif, objet de l'invention, est utilisé dans un matériau creux ou friable. Le mécanisme d'expansion diamétrale est initié par la remontée de la partie extrême 2 de la cheville, sous l'effet du vissage, qui torsade les zones prédécoupées, ce tortillement garantissant l'intégrité du support sans détérioration ;
- une troisième partie 4, formant l'autre extrémité du fût et recevant un moyen de fixation de type vis à bois, à métaux ou pour matériau friable, et disposant sur sa paroi externe d'une zone de raccordement avec la partie médiane du fût, est munie d'une pluralité de nervures 9 faisant saillie extérieurement et qui sont uniformément réparties sur le contour externe de cette troisième partie 4, ces nervures réalisant des dispositifs anti-rotation de la cheville par rapport à son environnement. Cette extrémité du fût dispose par ailleurs, placé sensiblement au-dessus desdites nervures 9, d'un bourrelet 10 formant anneau et venu directement de fabrication avec le fût 1.

Ce bourrelet 10 autorise le montage d'une virole 11 venue directement lors de l'élaboration de la partie principale du fût du dispositif de fixation, ou qui est rapportée ultérieurement lors de la mise en place de la cheville.

Cette virole 11 est obtenue par une opération de moulage de matière plastique ou d'injection, l'opération de moulage ou d'injection pouvant être mono-matière ou bi-matière.

La matière choisie pour réaliser cette virole 11 est une mousse d'élastomère ou un caoutchouc d'origine naturelle ou synthétique et possède d'excellentes propriétés au niveau de l'absorption des vibrations d'origine mécanique.

La virole 11, globalement cylindrique, est pourvue d'un orifice 12 central dont le diamètre est sensiblement inférieur au diamètre extérieur du fût afin d'assurer le maintien par déformation élastique, la solidarisation étant provoquée par une zone en relief 13 réalisée à l'intérieur de l'alésage 12 de la virole 11 et qui coopère avec le bourrelet 10 du fût 1.

En outre, la virole 11 présente un épaulement 14 de manière à conformer une zone d'appui au niveau des orifices pratiqués sur le dosseret de la chaudière.

L'invention précédemment décrite offre de multiples avantages car elle simplifie le montage des dosserets de chaudière, il n'y a plus d'empilement de pièces (cheville, vis, rondelle, plot élastique), d'où également une répercussion sur le coût global du montage. En outre, étant donné que le plot acoustique coopère au niveau de l'extrémité du fût de la cheville, il participe à la rigidité de l'ensemble et il n'y a plus de risque d'écrasement de la tête de la cheville lors du serrage.

## Revendications

1. Dispositif de fixation comportant une virole (11) et un fût (1) divisé en trois parties (2, 3, 4) :
- une première (2), sensiblement cylindrique, disposée dans la partie opposée (4) du fût (1) à celle qui est apte à recevoir moyen de fixation, cette première partie (2) étant pourvue d'un alésage (5);
- une seconde (3), également sensiblement cylindrique et pourvue extérieurement d'une pluralité de collerettes (7) tronconiques juxtaposées, également traversée par l'alésage (5) central du fût (1), cette zone étant munie d'une pluralité de fentes (8) longitudinales ou d'amorces à partir de zones prédécoupées uniformément réparties sur la périphérie du fût (1), de manière à autoriser une déformation en forme d'expansion diamétrale ;
- une troisième partie (4), formant l'autre extrémité du fût (1) et apte à recevoir le moyen de fixation, disposant sur sa paroi externe d'une zone de raccordement avec la partie médiane du fût, et munie d'une pluralité de nervures (9) faisant saillie extérieurement, qui sont uniformément réparties sur le contour externe de cette troisième partie (4), cette extrémité du fût (1) disposant d'un bourrelet (10) pour le montage de la virole (11).

2. Dispositif selon la revendication 1, **caractérisé en ce que** la virole (11), globalement cylindrique, est pourvue d'un orifice (12) central dont le diamètre est sensiblement inférieur au diamètre extérieur du fût afin d'assurer le maintien par déformation élastique, la solidarisation étant provoquée par une zone en relief (13) réalisée à l'intérieur de l'orifice (12) de la virole (11) et qui coopère avec le bourrelet (10) du fût (1).

3. Dispositif selon l'une des revendications 1 ou 2, **caractérisé en ce que** la virole (11) présente un épaulement (14) de manière à conformer une zone d'appui au niveau d'orifices pratiqués sur un dosseret d'une chaudière.

4. Dispositif selon l'une quelconque des revendications précédentes, **caractérisé en ce** la matière plastique constituant le fût (1) est choisie parmi les polyéthylènes à haute densité, les polyamides et les polyamides 6.6 choc.

5. Dispositif selon l'une quelconque des revendications précédentes, **caractérisé en ce** la matière choisie pour réaliser la virole (11) est une mousse d'élastomère ou un caoutchouc d'origine naturelle ou synthétique et possède propriétés au niveau de l'absorption des vibrations.

## Patentansprüche

1. Befestigungsvorrichtung, die einen Bund (11) und einen Schaft (1) umfasst, der in drei Teile (2, 3, 4):
- einen ersten Teil (2), der im Wesentlichen zylindrisch und gegenüber dem Teil (4) des Schafts (1) angeordnet ist, der in der Lage ist, ein Befestigungsmittel aufzunehmen, wobei dieser erste Teil (2) mit einer Bohrung (5) versehen ist,
- einen zweiten Teil (3), der ebenfalls im Wesentlichen zylindrisch, außen mit einer Vielzahl von nebeneinander angeordneten kegelstumpfförmigen Bunden (7) und ebenfalls mit der mittigen Bohrung (5) des Schafts (1) versehen ist, wobei dieser Teil, ausgehend von vorher zugeschnittenen Bereichen, die über den Umfang des Schafts (1) gleichmäßig verteilt sind, derart mit einer Vielzahl von Längs- bzw. Anfangsschlitzen (8) ausgestattet ist, dass eine Verformung in Gestalt einer Ausdehnung in Durchmesserrichtung möglich wird, und
- einen dritten Teil (4), der das andere Ende des Schafts (1) bildet, in der Lage ist, das Befestigungsmittel aufzunehmen, auf der Außenwand über einen Anschlußbereich an den mittleren Teil des Schafts verfügt und mit einer Vielzahl von Rippen (9) versehen ist, die nach außen vorstehen und über den Außenumfang des dritten Teils (4) gleichmäßig verteilt sind, wobei dieses Ende des Schafts (1) über eine Wulst (10) für das Anbringen des Bundes (11) verfügt, unterteilt ist.

2. Vorrichtung nach Anspruch 1, **dadurch gekennzeichnet, dass** der im Großen und Ganzen zylindrische Bund (11) eine mittige Öffnung (12) besitzt, deren Durchmesser etwas kleiner als der Außendurchmesser des Schafts ist, um den Zusammenhalt durch elastische Verformung sicherzustellen, und die feste Verbindung von einem vertieften Bereich (13) bewirkt wird, der in der Öffnung (12) des Bundes (11) hergestellt ist und mit der Wulst (10) des Schafts (1) zusammenwirkt.

3. Vorrichtung nach Anspruch 1 oder 2, **dadurch gekennzeichnet, dass** der Bund (11) derart einen Absatz (14) aufweist, dass an einer in einer Stütze für einen Heizkessel angebrachten Öffnung ein Auflagebereich ausgebildet wird.

4. Vorrichtung nach einem der vorhergehenden Anspruchs, **dadurch gekennzeichnet, dass** der den Schaft (1) bildende Kunststoff aus Polyethylen mit hoher Dichte, Polyamid und schlagzähem Polyamid 66 ausgewählt ist.

5. Vorrichtung nach einem der vorhergehenden Ansprüche, **dadurch gekennzeichnet, dass** das zur Herstellung des Bundes (11) ausgewählte Material ein Elastomerschaumstoff oder ein Gummi natürlichen bzw. synthetischen Ursprungs ist und Schwingungen aufnehmen kann.

## Claims

1. Fixing device, comprising a collar (11) and a shank (1) divided into three parts (2, 3, 4):
- a first substantially cylindrical part (2) disposed in the part of the shank (1) remote from the part capable of receiving fixing means, this first part (2) being provided with a bore (5);
- a second, also substantially cylindrical part (3), provided externally with a plurality of juxtaposed truncated cone-shaped flanges (7) and also traversed by the central bore (5) of the shank (1), this zone being provided with a plurality of longitudinal slots or initiators from the pre-cut zones uniformly distributed over the periphery of the shank (1) to allow a deformation in the form of diametrical expansion;
- a third part (4) forming the other end of the shank (1) and capable of receiving the fixing means, having a connecting zone to the middle part of the shank on its external wall and provided with a plurality of ribs (9) projecting externally and distributed uniformly over the external contour of this third part (4), this end of the shank (1) having a bend (10) for mounting the collar (11).

2. Device according to claim 1, **characterised in that** the collar (11) which is cylindrical as a whole, is provided with a central orifice (12), of which the diameter is substantially smaller than the external diameter of the shank to ensure holding by elastic deformation, the join being achieved by a relief zone (13) produced inside the orifice (12) of the collar (11) and cooperating with the bend (10) of the shank (1).

3. Device according to either of claims 1 or 2, **characterised in that** the collar (11) has a shoulder (14) such that it forms a support zone in the region of orifices produced on a boiler backing.

4. Device according to any one of the preceding claims, **characterised in that** the plastics material constituting the shank 1 is selected from high-density polyethylenes, polyamides and high impact polyamides 6.6.

5. Device according to any one of the preceding claims, **characterised in that** the material selected to produce the collar (11) is an elastomeric foam or a rubber of natural or synthetic origin and has vibration absorption properties.
